# NEUE EUROPÄISCHE PATENTSCHRIFT

(11) **EP 0 845 234 B2**
(45) Veröffentlichungstag und Bekanntmachung des Hinweises auf die Entscheidung über den Einspruch: **03.08.2005**
(45) Hinweis auf die Patenterteilung: 10.10.2001
(21) Anmeldenummer: 97120851.7
(22) Anmeldetag: 27.11.1997
(51) Int. Cl.: A47J 27/16, A47J 39/00

(54) **Vorrichtung und Verfahren zur Regelung des Feuchtigkeitsgehaltes in einer Kochvorrichtung**
Device and method to control the amount of humidity in a cooking device
Dispositif et méthode pour régler le niveau d'humidité dans un dispositif de cuisson

(30) Priorität: 28.11.1996 DE 19649452
(43) Veröffentlichungstag der Anmeldung: 03.06.1998
(73) Patentinhaber: Premark FEG L.L.C., Wilmington, Delaware 19891 (US)
(72) Erfinder: Bujeau, Robert, 89470 Moneteau (FR); Foray, Michel, 39230 Passenans (FR)
(74) Vertreter: Füchsle, Klaus, Dipl.-Ing.

(56) Entgegenhaltungen:
- DE-A- 2 851 671
- DE-B- 1 252 629
- DE-C- 3 215 812
- DE-C- 4 116 546
- FR-A- 2 285 834
- UA-A- 3 943 841
- US-A- 4 742 455

## Beschreibung

Die Erfindung betrifft eine Kochvorrichtung.

Kochvorrichtungen umfassen im folgenden Kochvorrichtungen, Kochvorrichtungen unter Verwendung von Heißluft oder feuchter Luft undKochvorrichtungen unter Umgebungsdruck. Kochvorrichtungen kommen insbesondere in Großküchen, aber auch im Haushaltsbereich zunehmend zum Einsatz. Der Vorteil von Kochvorrichtungen liegt darin, daß sich in einem Garbehälter durch das Einstellen eines erhöhten Drukkes die Siedetemperatur erhöht und somit die zu garenden Speisen bei Temperaturen über 100°C gegart werden können.

In der Technik sind auch Kochvorrichtungen bekannt, die im wesentlichen bei atmosphärischem Druck betrieben werden. Dies besitzt den Vorteil, daß Nahrungsmittel in besonders schonender Weise gekocht oder erwärmt werden können und ein Überkochen der Nahrungsmittel auf ein Minimum beschränkt wird.

Die DE 28 51 671 beschreibt eine Kochvorrichtung, bei welcher der in einem Dampferzeuger erzeugte Wasserdampf in die Dampfkammer eintritt und durch ein Gebläse innerhalb der Dampfkammer zirkuliert wird. Nach dem Austritt aus der Dampfkammer gelangt der Dampf in eine Kondensationskammer, in der Kaltwasser eingesprüht wird, wodurch der überschüssige Dampf, der in die Kondensationskammer abfließt, wenigstens teilweise kondensiert wird. In Betrieb muß aus diesem Grund über eine Kaltwasserzuführungsleitung kontinuierlich Wasser zugeführt werden, um die Kondensationseinrichtung in der Kondensationskammer zu betreiben

Der Erfindung liegt die Aufgabe zugrunde, eine Kochvorrichtung vorzuschlagen, die in verschiedenen Betriebsstufen betrieben werden kann und die eine einfache Regelung des Feuchtegehalts in der Kochvorrichtung gestattet.

Diese Aufgabe wird durch eine Kochvorrichtung mit den Merkmalen des Anspruchs 1 gelöst.

Vorteilhafte Ausführungsformen sind durch die übrigen Ansprüche gekennzeichnet.

Der Erfindung liegt der Gedanke zugrunde, daß durch das Vorsehen eines geschlossenen Strömungskreislaufs für das Dampf-Luft-Gemisch die Messung des Drucks im Kreislauf eine Aussage über den Feuchtegehalt des Dampf-Luft-Gemisches erlaubt und somit in Abhängigkeit vom Druck eine betriebsmäßig verbundene Einrichtung zur Dampferzeugung zum Erhöhen des Feuchtegehalts oder aber eine ebenfalls betriebsmäßig verbundene Kühleinrichtung zum Auskondensieren von Dampf und somit Erniedrigen des Dampfgehaltes betrieben werden kann.

Der Vorteil der erfindungsgemäßen Kochvorrichtung liegt darin, daß durch das Vorsehen eines geschlossenen Strömungskreislaufes für das Dampf-Luft-Gemisch und die oben beschriebene Regelung des Feuchtegehaltes keine Ventile oder andere mechanisch bewegten Einbauten benötigt werden. Des weiteren kann die erfindungsgemäße Vorrichtung ohne Austritt von Dampf in die Umgebung betrieben werden, wodurch sich die Verletzungsgefahren für den Nutzer verringern. Zudern ist kein Dampfabzug über der Vorrichtung notwendig.

Die in Kochvorrichtungen zu behandelnden Speisen besitzen einen sehr stark unterschiedlichen Wassergehalt. Dies führt dazu, daß sich in Abhängigkeit von den zu garenden Speisen ein unterschiedlicher Feuchtegehalt im Dampf-Luft-Gemisch einstellt. Aus einer bloßen Erfassung des Drucks sowie der Temperatur' im Garbehälter läßt sich jedoch nur eine Aussage zur Flüssigkeitsmenge im Sättigungszustand, nicht aber zu den individuell vorliegenden Betriebsbedingungen gewinnen. Daher ermöglicht es die erfindungsgemäße Vorrichtung erstmals, unabhängig von den zu behandelnden Speisen, den gewünschten Feuchtegehalt im umgewälzten Dampf-Luft-Gemisch einzustellen.

Indern sich der Druckaufnehmer direkt im Dampfraum des Dampferzeugers befindet, läßt sich eine sehr direkte, d.h. sehr schnell ansprechende und damit auch präzise Regelung des Drucks im Dampferzeuger erzielen.

Erfindungsgemaß steht die Einrichtung zur Dampferzeugung mit einer Luftzufuhrleitung in Verbindung, wobei die Luftzufuhrleitung durch Flüssigkeit, die sich in der Einrichtung zur Dampferzeugung befindet, absperrbar ist. Dies besitzt den Vorteil, daß die Luftzufuhr in Abhängigkeit vom Druck in dem geschlossenen Kreislauf regelbar ist. Ist der Druck im Dampferzeuger höher, so ist der Dampfgehalt ebenfalls höher, d.h. der Flüssigkeitspegel in der Luftzufuhrleitung steht höher. Dies wiederum führt zu einem dichten Abschließen der Luftzufuhrleitung, durch die Frischluft aus der Umgebung in das System eingeführt werden kann. Fällt hingegen der Druck im Dampferzeuger ab, so ist der Dampfgehalt niedriger und der Flüssigkeitspegel in der Luftzufuhrleitung fällt ab. Dies ermöglicht es, daß im Falle eines Druckabfalles selbsttätig Umgebungsluft in das System eingespeist wird.

Nach der Erfindung ist der Strömungskreislauf über eine Druckbegrenzungsvorrichtung mit einem Kondensatablauf verbunden. Dies besitzt den Vorteil, daß zum einen im Rahmen der Regelung des Feuchtegehalts in dem Strömungskreislauf überschüssiges Wasser bzw, Wasserdampf, d.h. ein das gewünschte Maß überschreitender Feuchtegehalt, aus dem Strömungskreislauf abgeführt werden kann. Des weiteren wird diese überschüssige Feuchte als Kondensat aus dem System ausgeschleust. Hierdurch kommt es nicht zu einem Austritt von Wasserdampf, der üblicherweise geruchsbehaftet ist und somit zu einer Belästigung der Nutzer führen würde. Zudem besteht nicht die Gefahr, daß im Rahmen der Regelung der Vorrichtung ein plötzliches Austreten von Wasserdampf zu einer Verletzung des Nutzers führen kann.

Im Bereich der Druckbegrenzungsvorrichtung ist eine zweite Kühleinrichtung anzuordnen, die sicherstellt, daß eine vorgegebene Kondensattemperatur von beispielsweise 60°C nicht überschritten wird.

Nach der Erfindung sind die Kühleinrichtungen mit einer Einspritzdüse für kaltes Wasser versehen. Dies stellt eine technisch sehr einfache Lösung für die Kühleinrichtungen dar, weil in allen Küchen ein Kaltwasseranschluß vorhanden ist, der mit der erfindungsgemäßen Kochvorrichtung verbindbar ist. Zudem wird in dem erfindungsgemäßen Prozeß keine Fremdkomponente eingeführt, da diese ohnehin mit Wasser betrieben wird. Schließlich läßt sich durch das Einsprühen fein zerstäubten Wassers aufgrund der sehr großen Wärmeübertragungsfläche eine sehr schnelle und wirkungsvolle Kondensation des Wasserdampfes im Dampf-Luft-Gemisch erzielen.

Mit der erfindungsgemäßen Vorrichtung läßt sich des weiteren eine sehr gute Temperaturverteilung innerhalb des Ofenraums erzielen Zum einen ist die Zufuhr von Frischluft geregelt und zum anderen wird die Frischluft mit der Heißluft dadurch intensiv vermischt, daß diese nach dem Eintritt in den Ofenraum zunächst in ein Rührorgan eingezogen wird, in dem eine intensive Vermischung mit der bereits im Ofenraum befindlichen Luft erfolgt. Dies führt auch dazu, daß sich im Dampfkochbetrieb eine Qualität bezüglich des .Garens von Speisen erreichen läßt, die nahe derjenigen bei Dampfkochgeräten unter Druck liegt. Hierdurch läßt sich die Zubereitungszeit beim Garen von Speisen und der Energieverbrauch der Kochvorrichtung verringern.

Ein weiterer Vorteil der erfindungsgemäßen Vorrichtung liegt darin, daß sich verschiedene Betriebsstufen, die anhand des Ausführungsbeispieles diskutiert werden, im Rahmen des Betriebs der erfindungsgemäßen Vorrichtung erzielen lassen:

Nachfolgend wird die Erfindung rein beispielhaft anhand der beigefügten Zeichnung beschrieben, die schematisch die wesentlichen Komponenten der erfindungsgemäßen Vorrichtung darstellt.

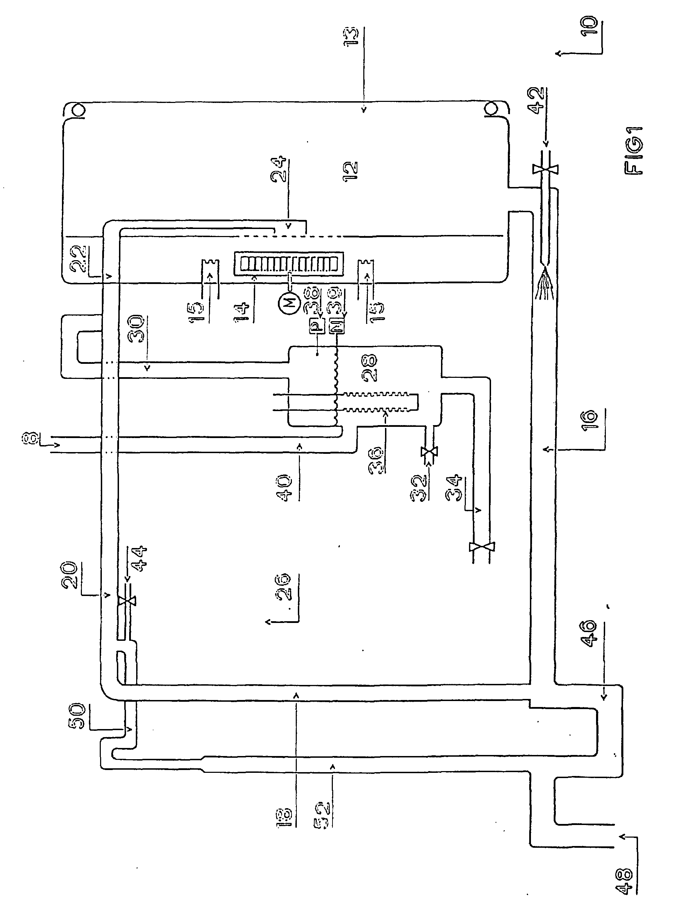

Fig. 1 zeigt die Kochvorrichtung sowie die daran angeschlossenen Einrichtungen zur Regelung der Kochvorrichtung in den später beschriebenen, einzelnen Betriebsstufen.

Das Kernstück der Vorrichtung, die allgemein mit Referenzziffer 10 bezeichnet ist, ist der Dampfgarbehälter 12, im folgenden kurz als Ofenraum bezeichnet, in dem sich beim Betrieb die zu garenden Lebensmittel befinden. Der Ofenraum 12 ist in einer in derTechnik üblichen Weise mit einem druckdicht abschließbaren Gehäuse versehen, das zum Einfüllen und Entnehmen der zu behandelnden Lebensmittel geöffnet werden kann. Der Ofenraum 12 besitzt eine Tür 13. Zusätzlich ist der Ofenraum mit einem angetriebenen Gebläse 14 versehen, das die frisch in den Behälter zugeführte Luft bzw. das Dampf-Luft-Gemisch mit der bereits im Behälter befindlichen, heißen, feuchten Luft vermischt und somit eine möglichst gleichmäßige Temperaturverteilung der Luft innerhalb des Behälters erzeugt. Zusätzlich kann sich im Ofenraum 12 eine Heizeinrichtung 15 befinden.

Der Ofenraum 12 steht mit einem geschlossenen Kreislauf 26 in Verbindung, in welchem die Luft mit einer beim Kochen gewünschten Luftfeuchtigkeit strömt. Der Kreislauf ist durch die Strömungsleitungen 16, 18, 20, 22 und 24 gebildet, wobei die Strömungsleitungen 16 und 24 mit dem Inneren des Ofenraums 12 in Verbindung stehen. Die Strömungsleitung 16 mündet in eine Bodenwand des Ofenraums 12 ein, während die Strömungsleitung im Ansaugbereich des Rührorganes 14 im Ofenraum endet. Hierdurch kommt es zu einer intensiven Vermischung zwischen frisch zugeführter Luft oder Dampf-Luft-Gemisch und dem Dampf-Luft-Gemisch im Ofenraum. Wie später beschrieben wird, erfolgt die Zirkulation innerhalb des durch die Strömungsleitungen 16, 18, 20, 22, 24 gebildeten Strömungskreislaufs 26 dadurch, daß der Eintritt und.der . Austritt in Bereiche unterschiedlichen Drucks des Offenraums 12, die durch die Verwendung der Vorrichtung erzeugt werden, gelegt sind.

Eine Einrichtung zur Dampferzeugung 28 ist über eine Dampfleitung 30 mit dem Strömungskreislauf 26 verbunden. Im vorliegenden Fall mündet die Dampfleitung 30 in die Strömungsleitung 22. Es ist jedoch auch in gleicher Weise möglich, daß die Einrichtung zur Dampferzeugung 28 direkt mit dem Ofenraum 12 in Verbindung steht. Die Einrichtung zur Dampferzeugung 28 besteht im wesentlichen aus einem abgeschlossenen Behälter, in dem sich zu verdampfende Flüssigkeit befindet. Hierzu kann Wasser über eine Zuleitung 32 in den Behälter eingespeist werden und, im Rahmen von Service- oder Reinigungsarbeiten, auch mit Hilfe einer Entleerungsleitung 34 wieder aus dem Behälter abgelassen werden. Sowohl die Zuleitung 32 wie auch die Entleerungsleitung 34 sind mit einem geeigneten Absperrventil versehen.

Das im Behälter des Dampferzeugers 28 vorhandene Wasser wird vorzugsweise mit Hilfe einer elektrischen oder gasbetriebenen Heizeinrichtung 36 erhitzt, die in das im Behälter befindliche Wasser eintaucht. Hierdurch bildet sich im Behälter des Dampferzeugers 28 ein Zweiphasengemisch von Wasser und Wasserdampf, die miteinander im Gleichgewicht stehen.

Des weiteren befindet sich im Behälter des Dampferzeugers 28 ein Drucksensor 38, der im Dampfraum des Dampferzeugers angeordnet ist und mit einer geeigneten Regelungsvorrichtung (nicht dargestellt) verbunden ist, die auch in Verbindung mit den Heizeinrichtungen 36 und 15 sowie den später beschriebenen Kühleinrichtungen 42 und 44 steht. Ein Füllstandssensor 39 dient der Bestimmung des Flüssigkeitsstandes im Behälter 28 und ist ebenfalls mit einer geeigneten Regelungsvorrichtung (nicht dargestellt) verbunden. Der Drucksensor 38 sowie Füllstandssensor 39 können in beliebiger, in der Technik bekannter Weise ausgeführt werden.

Der Behälter des Dampferzeugers 28 ist zuzusätzlich mit einer Luftzufuhrleitung 40 verbunden, die seitlich an der Mantelfläche des Behälters in diesen einmündet. Die Luftzufuhrleitung endet an einer geeigneten Stelle, von der aus Frischluft durch die Luftzufuhrleitung in den Behälter des Dampferzeugers 28 angesaugt werden kann.

Des weiteren befinden sich in der Vorrichtung 10 mehrere Einrichtungen zum Kühlen der zirkulierenden Luft im Strömungskreislauf 26. Im dargestellten Ausführungsbeispiel sind dies die Kühleinrichtungen 42 und 44, die jeweils mit dem Strömungskreislauf 26 in Verbindung stehen und an einer Versorgungseinrichtung für kaltes Wasser über ein zwischengeschaltetes Ventil angeschlossen sind. Diese Kühleinrichtungen gestatten es, die verschiedenen Drücke im System zu verändern, wie später eingehend erläutert wird.

In der Vorrichtung 10 schließt sich am Strömungskreislauf 26 zwischen den Strömungsleitungen 16 und 18 eine Einrichtung 46 an, die dazu dient, eine Trennung zwischen dem Strömungskreislauf 26 und dem Auslaß 48 für das Abführen von Kondensat herzustellen. Diese Einrichtung ist im vorliegenden Ausführungsbeispiel als flüssigkeitsgefüllter Siphon ausgeführt. Eine zweite Einrichtung 50 zwischen dem Strömungskreislauf 26 und einer Rohrleitung 52 zum Auslaß 48 gestattet als Druckbegrenzungsvorrichtung erhöhte und erniedrigte Drücke im geschlossenen StrömungsKreislauf 26 und ist ebenfalls als Siphon ausgeführt.

Im folgenden soll die Funktion der Vorrichtung 10 in den verschiedenen, möglichen Betriebsstufen erläutert werden. Es ist an dieser Stelle festzustellen, daß in dem gesamten System, das aus dem Ofenraum 12, dem Strömungskreislauf 26 und der Einrichtung zur Dampferzeugung 28 besteht, jede Änderung des Druckkes, der durch den Drucksensor 38 gemessen wird, bei gegebener Temperatur einer Änderung des Feuchtigkeitsgrades entspricht.

### BETRIEB DER ANLAGE BEIM DAMPFKOCHEN

Der in der Einrichtung zur Dampferzeugung 28 erzeugte Dampf führt zu einem erhöhten Druck im Dampferzeuger und, aufgrund der Verbindung zwischen der Dampfleitung 30 und dem Strömungskreislauf 26, erzeugt eine Zirkulation des Dampfs in Richtung auf den Ofenraum 12. Gleichzeitig wird die Luftzufuhrleitung 40 durch das Ansteigen des Flüssigkeitsstands im Behälter des Dampferzeugers 28 wie auch der Luftzufuhrleitung 40 dicht verschlossen. Es wird somit keine Umgebungsluft in das System eingespeist. Aufgrund der Druckunterschiede zwischen dem Dampf, der durch die Strömungsleitungen 22, 24 in den Ofenraum 12 eingespeist wird und dem Druck der im Ofenraum 12 befindlichen Luft kommt es zu einer Zirkulation der Luft im Strömungskreislauf 26. Die.Luft des Ofenraums 12 wird fortschreitend über die Strömungsleitungen 16 und 18 abgeführt. Wenn der vom Drucksensor 38 erfaßte Druck zu hoch wird, werden die Kühleinrichtungen 42 und 44 betrieben, welche die Feuchtigkeit in der heißen und feuchten Luft kondensieren, wobei das Kondensat über die Siphons 46 und 50, welche den Kreislauf gegen die Umgebung abdichten, entweicht. Hierdurch tritt kein Dampf in die Umgebung aus.

Gleichzeitig gestattet es die Regelung des vom Drucksensor 38 erfaßten Druckes, daß unter Berücksichtigung des Umgebungsdruckes die Dampferzeugung optimiert wird, wobei die Luftfeuchtigkeit in Betracht gezogen wird, die von den zu garenden Speisen während des Kochvorganges erzeugt wird.

Der im Dampferzeuger 28 erzeugte Dampf wird durch das Rührorgan 14 durch die Dampfleitung 30 sowie Strömungsleitungen 22 und 24 eingesaugt und gelangt in den Ofenraum 12, in dem er die Luft ersetzt, die aus diesem über die Strömungsleitungen 16 und 18 und durch die Einrichtung 50 in Form eines Siphons entweicht.

### KONVEKTIONSBETRIEB

Im Konvektionsbetrieb findet keine Erzeugung von Dampf statt. Die Vorrichtung kann im Konvektionsbetrieb auf zwei verschiedene Weisen betrieben werden:
- Kochen unter Zurückhalten der von den zu garenden Speisen erzeugten Feuchtigkeit, entsprechend einem herkömmlichen Dampfkochbehälter mit geschlossenem Abzug; und
- Kochen unter Abführen der von den zu garenden Speisen erzeugten Feuchtigkeit (Trocknen), das der Betriebsweise eines herkömmlichen Konvektionsofens mit offenem Abzug entspricht.

Beim Betrieb der erfindungsgemäßen Vorrichtung in der erstgenannten Betriebsstufe des Konvektionskochens erzeugt der von dem Feuchtigkeitsgehalt in den Nahrungsmitteln erzeugte Dampf einen Überdruck in dem gesamten Strömungskreislauf 26 einschließlich der Einrichtung zur Dampferzeugung 28, die selbst nicht betrieben wird. Dies führt zu einem Verschließen der Luftzufuhrleitung 40 durch das Ansteigen des Flüssigkeitsstandes im Bereich der Einmündung der Luftzufuhrleitung 40 in den Behälter zur Dampferzeugung 28. Die Vorrichtung arbeitet somit mit einem geschlossenen Strömungskreislauf.

Für die zweitgenannte obige Kochstufe im Konvektionskochbetrieb wird eine künstliche Druckabsenkung in der Vorrichtung durch die Kühleinrichtung 42 erzeugt. Indem kaltes Wasser in die Strömungsleitung 16 eingespritzt wird, kondensiert Dampf im Strömungskreislauf 26 aus, was eine Absenkung des Druckes bewirkt. Dies führt dazu, daß der Eintritt von Frischluft durch die Luftzufuhrleitung 40 ermöglicht wird, weil die Einmündung der Luftzufuhrleitung 40 in den Behälter des Dampferzeugers 28 im Bereich des Dampfraumes zu liegen kommt. Nach und nach ersetzt die frische Luft die feuchte Luft in der Vorrichtung und wird wiederum mit der Feuchtigkeit der Lebensmittel beladen, was zu einer Trocknung der letzteren führt.

Mit den Informationen, die durch den Drucksensor 38 bereitgestellt werden, kann die Kühleinrichtung 42 so gesteuert werden, daß in der ersten oben genannten Betriebsstufe der Feuchtigkeitsgrad geregelt wird und in der zweiten genannten Betriebsstufe die Trocknungsgeschwindigkeit einstellbar ist. In beiden Fällen ist die Einrichtung zur Dampferzeugung 28 nicht in Betrieb. Im erstgenannten Fall des Kochens im geschlossenen Kreislauf, d.h. ohne Frischluftzufuhr von außen, kann der Temperaturanstieg durch die Heizeinrichtung 15 des Ofenraums 12 einen mehr oder weniger hohen Druck erzeugen, dessen Höhe von der in dem Lebensmittel enthaltenen Feuchtigkeit abhängt. Diese heiße, feuchte Luft, die in dem geschlossenen Strömungskreislauf 26 zirkuliert, kann durch das Injizieren von kaltem Wasser durch die in der Kühleinrichtung 42 oder Kühleinrichtung 44 in den Strömungskreislauf 26 abgekühft werden, wodurch der Dampf in der zirkulierenden Luft teilweise auskondensiert und sich somit der Feuchtigkeitsgehalt der zirkulierenden Luft regeln läßt. Auch in der zweiten Betriebsstufe des Trocknens der zu garenden Speisen, d.h. beim Zuführen von Umgebungsluft durch die Zufuhrleitung 40, kann zusätzlich durch das Einspritzen kalten Wassers in einer oder beiden der Kühleinrichtungen 42 und 44 Feuchtigkeit aus der Luft auskondensiert werden. Findet ein Druckabfall im Ofenraum 12 statt, so wird durch die Luftzufuhrleitung 40 Umgebungsluft in die Vorrichtung 10 zugeführt.

### GEMISCHTER KOCHBETRIEB (Konvektionskochen und Dampfkochen)

Diese kombinierte Betriebsführung ist an die beiden Betriebsarten des Konvektionskochens und Dampfkochens angepaßt. Wie oben bereits ausgeführt wurde, kann der Druck sowohl durch die genaue Regelung unter Verwendung des Dampferzeugers oder den Betrieb der Kühleinrichtungen für eine gegebene Temperatur eingestellt werden. Somit kann eine auf das zu verarbeitende Produkt abgestimmte Luftfeuchtigkeit eingestellt und geregelt werden

Während beim Betrieb eines herkömmlichen Dampfkochgerätes der dem Kochgefäß hinzugefügte Dampf nicht in Abhängigkeit von der im Produkt enthaltenen Feuchtigkeit geregelt werden kann, ist dies mit der vorliegenden Vorrichtung möglich. Durch den gezielten Betrieb des Dampferzeugers oder aber der Küh-' leinrichtungen läßt sich der gewünschte Feuchtegehalt im Ofenraum 12 sowie dem Strömungskreislauf 26 gezielt einstellen.

### KÜHLBETRIEB

Häufig ist es notwendig, die Vorrichtung schnell abzukühlen, um von einem Kochbetrieb (Konvektionskochen oder gemischtes Kochen) mit erhöhter Temperatur zu einem reinen Dampfkochbetrieb mit einer Temperatur unter 100°C zu gelangen.

Dies kann mit der erfindungsgemäßenVorrichtung sehr leicht erzielt werden, indem mit Hilfe der Kühleinrichtung 42 ein sehr starker Druckabfall erzeugt wird. Dieser Druckabfall führt, wie oben im Zusammenhang mit dem Konvektionskochen mit dem Ziel des Trocknens der Produkte erläutert wurde, zu einer Anhebung des Flüssigkeitsstands im Behälter der Einrichtung zur Dampferzeugung 28 sowie einem Absenken in der Luftzufuhrleitung, wodurch der Zutritt von Frischluft durch die Luftzufuhrleitung 40 ermöglicht wird. Des weiteren kann aus dem Siphon 50 kaltes Wasser in Richtung des Ofenraums 12 angesaugt werden. Dieses Ansaugen geschieht selbstregulierend unter Vermeidung jeglichen Überdrucks oder Unterdrucks, der die Vorrichtung beschädigen könnte.

Die vorgeschlagene Vorrichtung, deren einzelne Betriebsstufen im vorausgegangenen erläutert wurden, gestattet es, daß unabhängig von den zu garenden Lebensmitteln und deren Feuchtigkeitsgehalt der Dampfgehalt im Kreislauf der Vorrichtung 10 geregelt werden kann. Indem der Druck im Behälter der Vorrichtung zur Dampferzeugung gemessen wird, läßt sich feststellen, wie hoch der in den Nahrungsmitteln enthaltene Feuchtigkeitsgehalt ist. Bei Abweichungen von dem gewünschten Wert läßt sich der Dampfgehalt sowohl durch den Betrieb des Dampferzeugers erhöhen als auch durch das Einspritzen kalten Wassers in der Kühleinrichtung 42 erniedrigen.

In allen oben beschriebenen Betriebsstufen wird kein Dampf aus der Vorrichtung 10 an die Umgebung abgeführt. Dies ist ein wichtiger Gesichtspunkt der Betriebssicherheit der erfindungsgemäßen Vorrichtung. Von der Vorrichtung geht keine Gefahr aus, weil im Falle einer Störung der Druck- oder Temperaturführung sich die Einrichtung 46 zum Trennen des Strömungskreislaufs 26 von dem Auslaß 48 in Form eines flüssigkeitsgefüllten Siphons entleert. Sollte der Siphon 46 jedoch verstopft sein, so kann möglicherweise das Wasser in die Rohrleitung 52 geschoben werden, um wieder den Auslaß 48 zum Abführen von Kondensat zu öffnen. Die Vorrichtung ist zuverlässig und störungsunanfällig, weil keine bewegten mechanischen Teile, wie Ventile, vorhanden sind.

## Patentansprüche

1. Kochvorrichtung, umfassend:
- einen Ofenraum (12);
- eine Einrichtung zur Dampferzeugung (28), die mit dem Ofenraum (12) über eine Strömungsverbindung (30) in Verbindung steht; und
- einen geschlossenen Strömungskreislauf (16, 18, 20, 22, 24) für ein Dampf-Luft-Gemisch, der mit dem Ofenraum (12) in Verbindung steht;
**dadurch gekennzeichnet, dass**
- eine selbstregelnd ausgeführte Kühleinrichtung (42) vorgesehen ist;
- eine Regelvorrichtung vorgesehen ist, mit der der Feuchtegehalt des Luft-Dampf-Gemisches durch den Betrieb der Einrichtung zur Dampferzeugung (28) und/oder der Kühleinrichtung (42) im Strömungskreislauf regelbar ist und die mit einem Drucksensor (38) in der Einrichtung zur Dampferzeugung (28) verbunden ist;
- die Einrichtung zur Dampferzeugung (28) mit einer Luftzufuhrleitung (40) in Verbindung steht; wobei die Luftzufuhrleitung (40) durch Flüssigkeit, die sich in der Einrichtung zur Dampferzeugung (28) befindet, absperrbar ist; und
- der Strömungskreislauf (16, 18, 20, 22, 24) über eine Druckbegrenzungsvorrichtung (50) mit einem Kondensatablauf (48) verbunden ist; und
- die Kühleinrichtung (42) und eine zweite im Bereich der Druckbegrenzungsvorrichtung (50) angeordnete Kühleinrichtung (44) jeweils mit einer Einspritzdüse für kaltes Wasser versehen sind.

2. Kochvorrichtung nach Anspruch 1,
**dadurch gekennzeichnet, dass**
der Strömungskreislauf (16, 18, 20, 22, 24) außerhalb des Ofenraums (12) angeordnet ist.

## Claims

1. Cooking device comprising:
- an oven chamber (12);
- a device for steam production (28), which is connected with the oven chamber (12) via a flow connection (30); and
- a closed flow circuit (16, 18, 20, 22, 24) for a steam-air mixture, which is connected to the oven chamber (12);
**characterized in that**
- a self-regulating cooling device (42) is provided;
- a control device is provided for controlling the moisture content of the air-steam mixture by operating the device for steam production (28) and/or the cooling device (42) in flow circuit, and which is connected with a pressure sensor in the device for steam production;
- the device for steam production (28) is connected to an air supply pipe (40); wherein the air supply pipe (40) can be closed by liquid which is situated in the device for steam production (28);
- the flow circuit (16, 18, 20, 22, 24) is connected to a condensate outlet (48) via a pressure-limiting device (50); and
- the cooling device (42) and a second cooling device (44) are arranged in the region of the pressure-limiting device (50) and are each provided with an injection nozzle for cold water.

2. Cooking device according to claim 1, **characterized in that** the flow circuit (16, 18, 20, 22, 24) is arranged outside the oven chamber (12).

## Revendications

1. Dispositif de cuisson, comprenant :
- une enceinte de four (12) ;
- un dispositif de génération de vapeur (28), qui est en liaison avec l'enceinte de four (12) par l'intermédiaire d'une conduite d'écoulement (30) ; et
- un circuit d'écoulement fermé (16, 18, 20, 22, 24) pour un mélange vapeur-air, qui est en liaison avec l'enceinte de four (12) ;
**caractérisé en ce que**
- il est prévu un dispositif de refroidissement (42) autorégulateur ;
- il est prévu un dispositif de régulation, avec lequel la teneur en humidité du mélange air-vapeur est réglable par le fonctionnement du dispositif de génération de vapeur (28) et/ou par le dispositif de refroidissement (42) dans le circuit d'écoulement et qui est relié à un capteur de pression (38) dans le dispositif de génération de vapeur (28) ;
- le dispositif de génération de vapeur (28) est en liaison avec une conduite d'amenée d'air (40), la conduite d'amenée d'air (40) pouvant être fermée par un liquide se trouvant dans le dispositif de génération de vapeur (28) ;
- le circuit d'écoulement (16, 18, 20, 22, 24) est relié par l'intermédiaire d'un dispositif de limitation de pression (50) à une évacuation de condensat (48) ; et
- le dispositif de refroidissement (42) et un deuxième dispositif de refroidissement (44) disposé dans la zone du dispositif de limitation de pression (50) sont munis chacun d'une buse d'injection pour de l'eau froide.

2. Dispositif de cuisson selon la revendication 1,
**caractérisé en ce que** le circuit d'écoulement (16, 18, 20, 22, 24) est disposé à l'extérieur de l'enceinte de four (12).
